# EUROPÄISCHE PATENTSCHRIFT

(11) **EP 1 739 516 B1**
(45) Veröffentlichungstag und Bekanntmachung des Hinweises auf die Patenterteilung: **22.12.2010**
(21) Anmeldenummer: 06012779.2
(22) Anmeldetag: 21.06.2006
(51) Int. Cl.: G05B 19/418, G05B 23/02, G07C 9/00, G06K 9/00

(54) **Anlage und Verfahren zur Überwachung des Transfers von mit Identifikationsträgern versehenen Gütern**
System and method for surveying the transfer of goods provided with identification carriers
Dispositif et procédé destinés à la surveillance du transfert d'objets munis d'identificateurs

(30) Priorität: 21.06.2005 DE 102005029003
(43) Veröffentlichungstag der Anmeldung: 03.01.2007
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- WO-A-2004/029740
- DE-A1- 10 163 688
- DE-A1- 10 227 075
- US-A- 5 708 423
- US-A1- 2005 012 612

## Beschreibung

Die Erfindung betrifft eine Anlage zur Überwachung des Transfers von mit Identifikationsträgern versehenen Gütern nach dem Oberbegriff des Anspruchs 1 und ein Verfahren zur Überwachung des Transfers von mit Identifikationsträgern versehenen Gütern nach dem Oberbegriff des Anspruchs 15.

Beim Transfer von Gütern zwischen einem mobilen Transporter und einem Lager erfolgt eine Überwachung der transferierten Güter visuell durch das Personal anhand von Lieferscheinen oder Transferlisten oder mit Unterstützung von Identifikationsträgern, mit denen die Güter versehen sind.

Diese Überwachung kann aber unzureichend bei Rückverfolgung von Beanstandungen hinsichtlich Art, Menge oder Schadenfreiheit der Güter sein.

Aus der DE 101 63 688 A1 sind ein Verfahren, ein System und ein Gerät zur Verfolgung von Gütern bekannt. Dabei werden Kennzeichnungen der Güter optisch erfasst, digitalisiert und per Funk an einen mit einem Computersystem verbundenen Empfänger übermittelt und ausgewertet.

Bei einem aus der US-A-5 708 423 bekannten System werden innerhalb eines Gebäudes vorhandene Standorte einer Vielzahl von Objekten in Echtzeit erfasst. Dies geschieht durch berührungsloses elektronisches Lesen von mit den Objekten verbundenen Identifikationsträgern beim Passieren eines Portals mit mehreren Leseantennen, wobei aus der Lesereichenfolge eine Bewegungsrichtung ermittelt wird. Die erfassten Daten werden mit den Standorten des Gebäudes verknüpft und können zusätzlich mit Bildern der Objekte ergänzt werden. Bei einem nicht erlaubten Passieren kann ein Alarmsignal erzeugt werden.

Aus der WO 2004/029740 ist ein Überwachungssystem für das Inventar eines Lagers bekannt. Dabei werden Identifikationsträger von Inventarteilen innerhalb des Lagers sowie an einem Lagerportal erfasst.

Der Erfindung liegt die Aufgabe zugrunde, eine Anlage und ein Verfahren zur Überwachung des Transfers von mit Identifikationsträgern versehenen Gütern dahingehend zu verbessern, dass weitere Merkmale der Güter automatisch erfasst und signalisiert werden.

Diese Aufgabe wird bei einer Anlage nach dem Oberbegriff des Anspruchs 1 durch die Merkmale dieses Anspruchs und bei einem Verfahren nach dem Oberbegriff des Anspruchs 11 durch die Merkmale jenes Anspruchs gelöst.

Weiterbildungen und vorteilhafte Ausgestaltungen ergeben sich aus den jeweiligen Unteransprüchen.

Erfindungsgemäß sind an einer Ladeschnittstelle der Anlage eine Lesevorrichtung zum kontaktlosen Lesen der Identifikationsträger, ein Standorterfassungsgerät, eine Signalvorrichtung und eine Bildaufnahmevorrichtung angeordnet und mit einer Auswerte- und Steuervorrichtung verbunden. Eine Ladeschnittstelle im Sinne der Erfindung ist ein Bereich zwischen einem mobilen Transporter und einem Lager oder zwischen zwei mobilen Transportern, den die Güter beim Transfer passieren müssen. Die Ladeschnittstelle kann z. B. die Ladeöffnung eines LKW, eine Rampe, eine Fördervorrichtung oder ein Portal des Lagers sein.

Beim Transfer der Güter über die Ladeschnittstelle werden Daten der an den Gütern befestigten Identifikationsträger mittels einer Lesevorrichtung gelesen, eine Bewegung und eine Bewegungsrichtung, wenigstens ein Bild der Güter, als auch Standortinformationen mittels eines Standorterfassungsgerätes erfasst und die Daten mit den Standortinformationen durch eine Auswerte- und Steuervorrichtung verknüpft.

Bei den Identifikationsträgern kann es sich um solche handeln, die eine Palette mit Gütern, Umverpackungen oder die einzelnen Güter selbst kennzeichnen.

Durch Verknüpfung der genannten Daten und Vergleich mit Referenzdaten wird eine Signalisierung dahingehend ermöglicht, ob ein Transfer zulässig ist oder nicht, und es ergibt sich eine ergänzende Dokumentation des Gütertransfers, die eine örtliche Rückverfolgung bei Beanstandungen erleichtert. Dies kann bei der Aufklärung von Fehlern oder anderen Störungen oder Unregelmäßigkeiten helfen.

Dies führt zu einer umfassenden Dokumentation des Transfers der Güter sowie von Lade- und Entladevorgängen. Fehlerhafte oder ungenau erfasste Daten lassen sich gegebenenfalls aus der der Fülle anderer Daten rekonstruieren.

Durch die Triggerung der Bildaufnahmevorrichtung und der Lesevorrichtung durch die Bewegungserfassungsvorrichtung wird die Aufnahme von Bildern auf den Zeitraum beschränkt, in dem ein Lesevorgang des Identifikationsträgers stattfindet oder eine Bewegung der Güter erfasst wird. Dadurch lassen sich Bilder in einheitlichen Positionen der Güter und daher mit gleicher Einstellung der Bildaufnahmevorrichtung hinsichtlich Entfernung und Aufnahmewinkel aufnehmen. Außerdem wird eine eindeutige zeitliche Zuordnung von Identifikationsdaten und Bildern ermöglicht. Auch werden Güter erfasst, die keine oder nicht lesbare Identifikationsträger tragen, wenn sie die Ladeschnittstelle passieren.

Die Bewegungserfassungsvorrichtung kann eine Doppel-Lichtschranke oder einen Radarsensor umfassen.

Es ist dadurch möglich, mit hoher Genauigkeit eine Bewegung von Gütern innerhalb eines vorgegebenen begrenzten Bereichs sowie die Bewegungsrichtung zu ermitteln.

Vorzugsweise umfasst die Lesevorrichtung vier seitlich der Ladeschnittstelle angeordnete Leseantennen, die mit jeweils einem eigenen Lesegerät oder über einen Antennenmultiplexer mit einem gemeinsamen Lesegerät verbunden sind.

Durch diese Anordnung der Leseantennen wird ein ausreichend kleiner Leseabstand zu Informationsträgern gewahrt, unabhängig von der Ausrichtung der Informationsträger auf den Gütern beim Passieren der Ladeschnittstelle.

Die Bildaufnahmevorrichtung kann wenigstens eine Kamera umfassen, die auf die Ladeschnittstelle gerichtet ist.

Dadurch werden nur Bilder der Güter aufgenommen, die die Ladeschnittstelle passieren. Diese Güter können formatfüllend erfasst werden, so dass Einzelheiten entsprechend der verfügbaren Auflösung der Kamera optimal abgebildet werden. Es können einzelne Bilder, eine Serie von einzelnen Bildern oder auch bewegte Sequenzen aufgenommen werden.

Die Bildaufnahmevorrichtung kann auch weitere Kameras umfassen, die auf Identifizierungsmerkmale des mobilen Transporters und/oder des Lagers gerichtet sind.

Die weiteren Identifizierungsmerkmale verbessern die Überwachung des Gütertransfers und können bei der Aufklärung von Fehlern oder anderen Störungen oder Unregelmäßigkeiten helfen. Bei einer stationären Anlage an der Ladeschnittstelle des Lagers können z. B. Aufnahmen des mobilen Transporters, nämlich des LKW, einer Beschriftung am LKW oder des amtlichen Kennzeichens erstellt werden. Bei einer mobilen Anlage auf dem mobilen Transporter können z. B. Aufnahmen der Umgebung, des Lagergebäudes oder eines Firmenschildes erstellt werden.

Die Auswerte- und Steuervorrichtung kann mit einem Datum- und Zeitgeber verbunden sein und mittels der Auswerte- und Steuervorrichtung können Datum- und Zeitangaben mit Daten der Identifikationsträger, Standortangaben und Bilder der Güter verknüpfbar sein.

Die Verknüpfung mit Datum- und Zeitangaben verbessert ebenfalls die Überwachung des Gütertransfers und kann bei der

Aufklärung von Fehlern oder anderen Störungen oder Unregelmäßigkeiten helfen.

Vorzugsweise ist die Auswerte- und Steuervorrichtung über eine Datenschnittstelle mit einem Netzwerk verbunden, über das Daten der Identifikationsträger und Bilder der Güter zu einer Zentrale übermittelbar sind.

Dadurch wird eine zeitnahe und weitgehend manipulationssichere Übermittlung aller relevanten zusammengehörigen Daten zur Zentrale ermöglicht. Die übermittelten Daten können mit Aufträgen und Listen abgeglichen werden und außerdem besteht die Möglichkeit, beim Auftreten von Fehlern oder Unregelmäßigkeiten umgehend Abhilfe zu schaffen oder zu veranlassen.

Zusätzlich können über das Netzwerk Lade- oder Berechtigungsdaten von der Zentrale zur Auswerte- und Steuervorrichtung übermittelbar sein. Mit Hilfe dieser Lade- oder Berechtigungsdaten können auch nach erstmaliger Festlegung von Logistikaufträgen noch während einer Tour neue Aufträge erteilt oder bestehende, noch nicht ausgeführte Aufträge verändert oder storniert und diese Aufträge an das Personal übermittelt werden.

Die Signalvorrichtung kann durch die Auswerte- und Steuervorrichtung in Abhängigkeit der Daten der Identifikationsträger ausschließlich oder in Abhängigkeit der Daten der Identifikationsträger in Verbindung mit gespeicherten Transferdaten und/oder über das Netzwerk übertragener Transferdaten steuerbar sein.

Die Signalvorrichtung kann dem Personal die zu transferierenden Güter vorgeben oder auch lediglich bei Passieren der Ladeschnittstelle anzeigen, ob der gerade vorgenommene Transfer richtig oder falsch ist.

Zusätzlich kann die Signalvorrichtung in Abhängigkeit von Datum und Zeitangaben und/oder von Standortangaben steuerbar sein.

Mittels dieser Angaben kann ergänzend ermittelt und angezeigt werden, welche Güter am aktuellen Ort zur aktuellen Zeit transferiert werden sollen. Vereinfachend kann auch angezeigt werden, ob der gerade vorgenommene Transfer am aktuellen Ort und zur aktuellen Zeit richtig oder falsch ist.

Nachfolgend wird die Erfindung anhand von Ausführungsbeispielen beschrieben, die in der Zeichnung dargestellt ist.

In der Zeichnung zeigen:
Fig. 1 eine stationäre Ladeschnittstelle mit einer Lesevorrichtung, einer Bildaufnahmevorrichtung einer Bewegungserfassungsvorrichtung und einer Auswerte- und Steuervorrichtung,
Fig. 2 eine Darstellung von Gütern mit Identifikationsträgern auf einer Palette,
Fig. 3 ein Blockschaltbild einer stationären Anlage mit einem Netzwerk und einer Zentrale,
Fig. 4 ein Blockschaltbild einer stationären Anlage und
Fig. 5 eine Sicht der in der Zentrale darzustellen Daten.

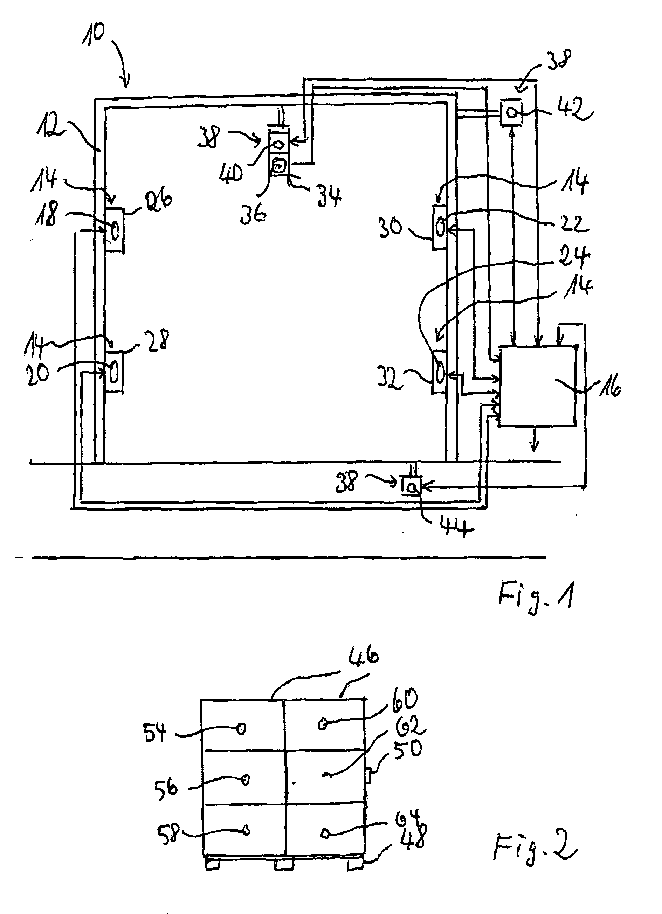

Die in Fig. 1 dargestellte stationäre Ladeschnittstelle 10 ist durch ein Portal 12 eines stationären Lagers gebildet. An dem Portal 12 befindet sich eine Lesevorrichtung 14, die mit einer Auswerte- und Steuervorrichtung 16 verbunden ist. Die Lesevorrichtung 14 umfasst an beiden Seiten des Portals 12 jeweils in unterschiedlicher Höhe angeordnete Leseantennen 18, 20, 22, 24 mit Lesegeräten 26, 28, 30, 32.

Am oberen Querschenkel des Portals 12 ist eine Bewegungserfassungsvorrichtung 34 angeordnet und ebenfalls mit der Auswerte- und Steuervorrichtung 16 verbunden. Die Bewegungserfassungsvorrichtung 34 umfasst einen Radarsensor 36, der Bewegungen von Objekten und deren Richtung im Lesebereich der Leseantennen 18, 20, 22, 24 erfasst.

Ferner ist dem Portal 12 eine Bildaufnahmevorrichtung 38 zugeordnet, die ebenfalls mit der Auswerte- und Steuervorrichtung 16 verbunden ist und drei Kameras 40, 42, 44 umfasst. Eine erste Kamera 40 ist auf das Portal 12 ausgerichtet, um Güter aufzunehmen, die durch das Portal transferiert werden. Eine zweite Kamera 42 ist nach außen gerichtet, um Merkmale des mobilen Transportes und dessen Umgebung aufzunehmen. Eine dritte Kamera 44 ist auf das amtliche Kennzeichen des mobilen Transporters gerichtet.

Fig. 2 zeigt eine Darstellung von Gütern 46 mit Identifikationsträgern 54, 56, 58, 60, 62, 64 auf einer Palette 48. An einer äußeren Längs- oder Querseite ist ein Identifikationsträger 50 zur Kennzeichnung der Palette 48 angeordnet. Dadurch ist gewährleistet, dass der Identifikationsträger 50 beim Transfer einer Palette 48 durch das Portal 12 - unabhängig von der Ausrichtung der Palette 48 - der Identifikationsträger 50 besonders nahe einer der Leseantennen 18, 20, 22, 24 ist und damit sicher gelesen werden kann.

Weitere Identifikationsträger können Umverpackungen zugeordnet sein, welche mehrere Einheiten von Gütern beinhalten. Schließlich können auch weitere Identifikationsträger den Einzelgütern zugeordnet sein. Je nach Art des Übertragungsmodus der Identifikationsträger und Lesereichweite können auch diese Identifikationsträger beim Transfer einer Palette durch das Portal gelesen werden.

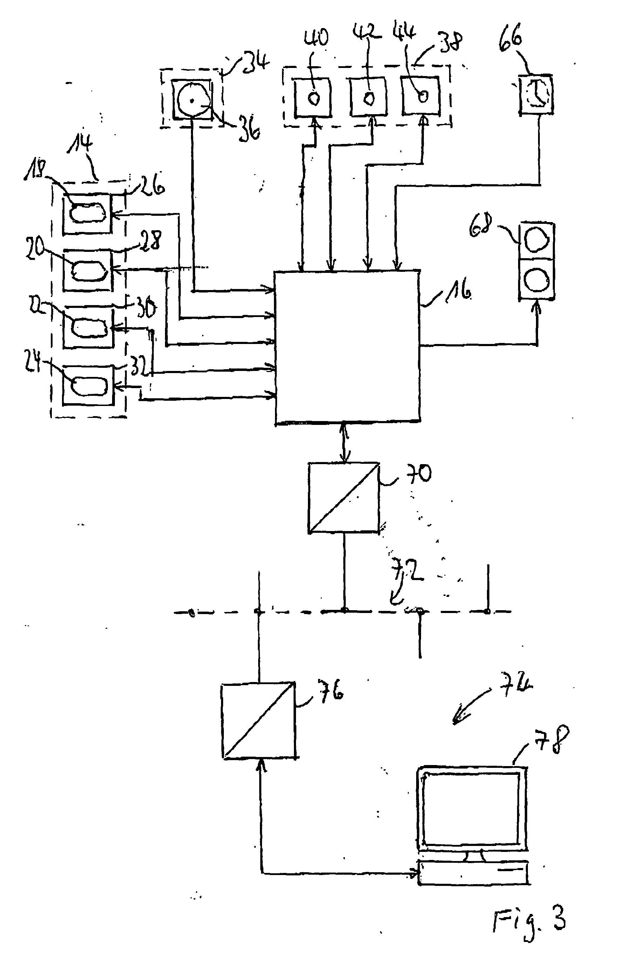

Fig. 3 zeigt ein Blockschaltbild einer stationären Anlage mit einem Netzwerk 72 und einer Zentrale 74. Die stationäre Anlage umfasst die bereits in Fig. 1 genannten Komponenten, nämlich die Auswerte- und Steuervorrichtung 16, die Lesevorrichtung 14 mit den Leseantennen 18, 20, 22, 24 und Lesegeräten 26, 28, 30, 32, die Bewegungserfassungsvorrichtung 34 mit dem Radarsensor 36 und die Bildaufnahmevorrichtung 38 mit den drei Kameras 40, 42, 44.

Mit der Auswerte- und Steuervorrichtung 16 ist ferner ein Datum- und Zeitgeber 66, eine Signalvorrichtung 68 und eine Datenschnittstelle 70 verbunden. Über die Datenschnittstelle 70 und ein angeschlossenes Netzwerk 72, z. B. das Internet, kann die Auswerte- und Steuervorrichtung 16 mit einer Zentrale 74 Daten austauschen. Dabei umfasst die Zentrale 74 ebenfalls eine Datenschnittstelle 76 und wenigstens einen Rechner 78.

Für den Betrieb der stationären Anlage sind mehrere Betriebsarten möglich. Diese können durch ein Steuerprogramm realisiert werden.
a) Wenn mit einem Identifikationsträger 50 versehene Güter durch das Portal 12 transferiert werden, werden Daten des Identifikationsträgers 50 mittels der Lesevorrichtung 14 gelesen und zur Auswerte- und Steuervorrichtung 16 übermittelt. Die Auswerte- und Steuervorrichtung 16 triggert daraufhin die Bildaufnahmevorrichtung 38. Die mittels einer oder mehrerer Kameras 40, 42, 44 aufgenommenen Bilder werden als Bilddaten zur Auswerte- und Steuervorrichtung 16 übertragen und mit den Daten des gelesenen Identifikationsträgers 50 z. B. zu einem Datensatz verknüpft. In einem Speicher der Auswerte- und Steuervorrichtung 16 werden sie gespeichert und/oder zur Zentrale 74 übermittelt.
b) Wenn Güter durch das Portal 12 transferiert werden, wird eine Bewegung und eine Bewegungsrichtung von der Bewegungserfassungsvorrichtung 34 erkannt und zur Auswerte- und Steuer-vorrichtung 16 übermittelt. Die Auswerte- und Steuervorrichtung 16 triggert daraufhin die Lesevorrichtung 14 und die Bildaufnahmevorrichtung 38. Die mittels einer oder mehrerer Kameras 40, 42, 44 aufgenommenen Bilder werden als Bilddaten zur Auswerte- und Steuervorrichtung 16 übertragen und mit der Bewegungsrichtung verknüpft. Sind die Güter mit einem lesbaren Identifikationsträger 50 versehen, werden auch die Daten des gelesenen Identifikationsträgers 50 mit den Bilddaten und Richtungsdaten verknüpft. In einem Speicher der Auswerte- und Steuervorrichtung 16 werden sie gespeichert und/oder zur Zentrale 74 übermittelt.
   Bei dieser Betriebsart ist es möglich, auch Güter ohne oder mit nicht lesbaren Identifikationsträgern zu identifizieren. In diesem Fall wird der Datensatz anstelle ein oder mehrerer Daten von Identifikationsträgern mit Daten verknüpft die einen Fehlercode enthalten. Der Fehlercode kann z. B. Angaben wie Identifikationsdaten nicht vorhanden, nicht lesbar oder systemfremd umfassen.
c) Ergänzend zu a und b können auch die von einem Datum- und Zeitgeber 66 gelieferten Daten mit den Bilddaten, Richtungsdaten und Daten der Identifikationsträger bzw. Fehlercodes verknüpft werden.
d) Ergänzend zu a, b, oder c können die gelesenen Daten des Identifikationsträgers 50 auch mit gespeicherten oder von der Zentrale 74 zur Auswerte- und Steuervorrichtung 16 übertragenen Referenzdaten verglichen werden und das Ergebnis des Vergleichs mit den weiteren Daten, nämlich Bilddaten, Richtungsdaten, Daten der Identifikationsträger bzw. Fehlercodes und Datum und Zeit verknüpft und dann gespeichert und/oder zur Zentrale 74 übertragen und/oder zur Erzeugung von Steuersignalen der Auswerte- und Steuervorrichtung 16 genutzt werden.
   Bei dem Vergleich können zusätzlich auch Datum- und Zeitangaben als weitere Referenz berücksichtigt werden. Mittels der Steuersignale kann die Signalvorrichtung 68 gesteuert werden. Dabei kann angezeigt werden, welche Güter am aktuellen Ort zur aktuellen Zeit transferiert werden sollen oder vereinfachend, ob der gerade vorgenommene Transfer am aktuellen Ort und zur aktuellen Zeit richtig oder falsch ist, z. B. als Rot/Grün-Ampel.
e) Bei Übertragung der Datensätze zu einer Zentrale 74 können die Daten zusätzlich auch mit einer Identnummer des Portals 12 oder eines Lesegerätes 26, 28, 30, 32 versehen werden, um bei mehreren Anlagen eine örtliche und betriebliche Zuordnung zu ermöglichen.

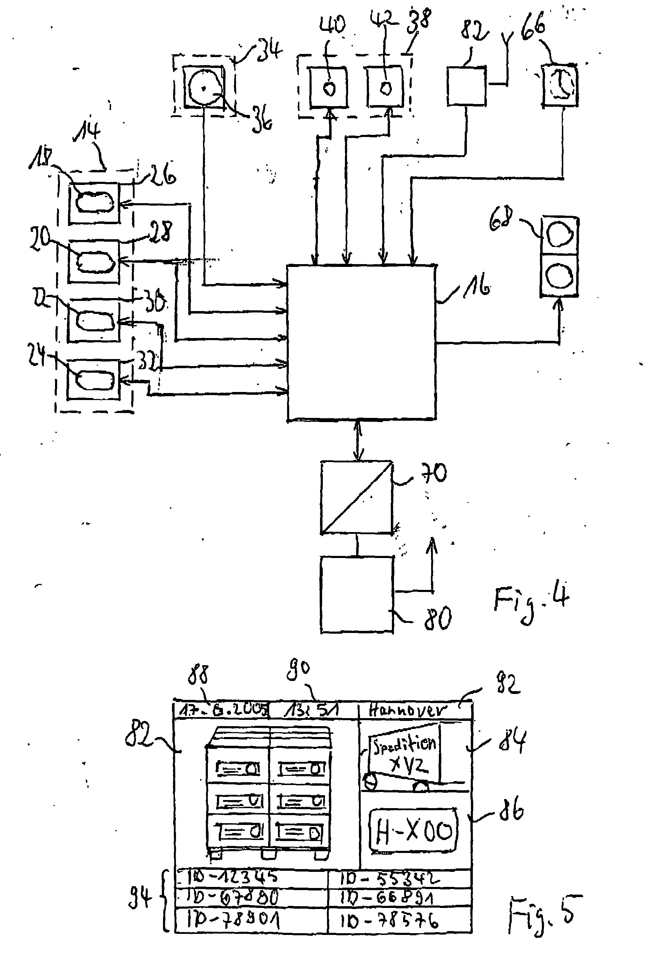

Fig. 4 zeigt ein Blockschaltbild einer mobilen Anlage. Die Ladeschnittstelle ist hier durch den Rahmen der Ladeöffnung gebildet. Dieser umfasst in Übereinstimmung mit Fig. 3 ebenfalls die Auswerte- und Steuervorrichtung 16, die Lesevorrichtung 14 mit den Leseantennen 18, 20, 22, 24 und Lesegeräten 26, 28, 30, 32, die Bewegungserfassungsvorrichtung 34 mit dem Radarsensor 34 und die Bildaufnahmevorrichtung 38 mit in diesem Fall zwei Kameras 40, 42, den Datum- und Zeitgeber 66, die Signalvorrichtung 68 und die Datenschnittstelle 70. Die zweite Kamera 42 ist auf das Lager gerichtet. Die Datenschnittstelle 70 ist für ein Mobilfunknetz ausgebildet, wie GSM, GPRS oder UMTS und mit einem Mobilfunkgerät 80 verbunden. Zusätzlich ist noch ein Standorterfassungsgerät 82, z. B. ein GPS-Gerät mit der Auswerte- und Steuervorrichtung 16 verbunden.

Für den Betrieb der mobilen Anlage sind die Betriebsarten a bis d in gleicher Weise wie bei der stationären Anlage möglich. Zusätzlich oder anstelle der Betriebsart e kann auch die Standortangabe im Klartext oder als geografischen Koordinaten mit den anderen Daten verknüpft werden. Auch können Standortangaben als Referenzdaten in der Auswerte- und Steuervorrichtung 16 gespeichert sein oder von der Zentrale 74 über das Netzwerk 72 zur Auswerte- und Steuervorrichtung 16 übertragen werden. Beim Vergleich können die aktuellen Standortdaten mit den Referenzdaten für sich oder gemeinsam mit den anderen Referenzdaten verglichen werden und das Ergebnis des Vergleichs kann analog zur stationären Variante genutzt werden.

Fig. 5 zeigt eine Sicht der zur Zentrale 74 übertragen Daten. Dabei kommt die Verknüpfung der Daten auch bei der visuellen Darstellung zum Tragen. Eine Sicht eines Transfervorganges enthält mehrere Sektoren zur Darstellung von alphanumerischen Daten und Bilddaten. So zeigt ein Sektor 82 eine Bilddarstellung des transferierten Gutes, ein Sektor 84 eine Bilddarstellung eines LKW mit Planenbeschriftung und ein Sektor 86 eine Bilddarstellung des amtlichen Kennzeichens des LKW. Ein weiterer Sektor 88 enthält das Datum und ein Sektor 90 die Uhrzeit des Transfers. Ein zusätzlicher Sektor 92 enthält den Ort oder eine Identnummer des Portals 12 oder der Lesegeräte 26, 28, 30, 32. Schließlich ist noch eine Sektor 94 für I-dentnummern vorgesehen, die als Daten in den Identifikationsträgern der Palette, der Umverpackung oder der Einzelgüter enthalten sind aus gelesen wurden.

## Patentansprüche

1. Anlage zur Überwachung des Transfers von mit Identifikationsträgern (50) versehenen Gütern, bestehend aus einer Ladeschnittstelle (10) zwischen einem mobilen Transporter und einem Lager oder zwischen zwei mobilen Transportern, über die der Transfer der Güter stattfindet, sowie einer Lesevorrichtung (14) zum kontaktlosen Lesen der Identifikationsträger (50), einem Standorterfassungsgerät (82), einer Bildaufnahmevorrichtung (38), einer Signalvorrichtung (68) und einer Auswerte- und Steuervorrichtung (16), wobei die Lesevorrichtung (14), das Standorterfassungsgerät (82), die Bildaufnahmevorrichtung (38) und die Signalvorrichtung (68) mit einer Auswerte- und Steuervorrichtung (16) verbunden sind und beim Transfer der Güter über die Ladeschnittstelle (10) mittels der Lesevorrichtung (14) Daten der Identifikationsträger (50), mittels des Standorterfassungsgerätes (82) Standortangaben der Güter erfassbar und mittels der Bildaufnahmevorrichtung (38) wenigstens ein Bild der Güter erfassbar und gemeinsam durch die Auswerte- und Steuervorrichtung (16) miteinander verknüpfbar sind und die Signalvorrichtung (68) durch die Auswerte- und Steuervorrichtung (16) steuerbar ist, **dadurch gekennzeichnet, dass** das Standorterfassungsgerät ein globales Positionserfassungsgerät (82) ist, dass die Bildaufnahmevorrichtung (38) und die Lesevorrichtung (14) durch eine mit der Auswerte- und Steuervorrichtung (16) verbundene, sowohl eine Bewegung als eine Bewegungsrichtung erfassende Bewegungserfassungsvorrichtung (34) triggerbar sind und die erfasste Bewegungsrichtung durch die Auswerte- und Steuervorrichtung (16) zusätzlich mit den Daten der Identifikationsträger (50), den durch das globale Positionserfassungsgerät (82) erfassten Standortangaben und dem wenigstens einen Bild der Güter verknüpfbar ist, wobei die Daten der Identifikationsträger und die erfassten Standortdaten mit Referenzdaten vergleichbar sind, das Ergebnis des Vergleichs mit dem wenigstens einen Bild, der erfassten Bewegungsrichtung und den Daten des Identifikationsträgers durch die Auswerte- und Steuervorrichtung (16) verknüpfbar und abhängig vom Vergleich die Signalvorrichtung (68) steuerbar ist.

2. Anlage nach Anspruch 1, **dadurch gekennzeichnet, dass** die Bewegungserfassungsvorrichtung (34) eine Doppel-Lichtschranke oder einen Radarsensor (36) umfasst.

3. Anlage nach Anspruch 1 oder 2, **dadurch gekennzeichnet, dass** die Lesevorrichtung (14) vier seitlich der Ladeschnittstelle (10) angeordnete Leseantennen (18, 20, 22, 24) umfasst, die mit jeweils einem eigenen Lesegerät (26, 28, 30, 32) oder über einen Antennenmultiplexer mit einem gemeinsamen Lesegerät verbunden sind.

4. Anlage nach einem der Ansprüche 1 bis 3, **dadurch gekennzeichnet, dass** die Bildaufnahmevorrichtung (38) wenigstens eine Kamera (40) umfasst, die auf die Ladeschnittstelle (10) gerichtet ist.

5. Anlage nach Anspruch 4, **dadurch gekennzeichnet, dass** die Bildaufnahmevorrichtung (38) weitere Kameras (42) umfasst, die auf den mobilen Transporter und/oder das Lager gerichtet sind.

6. Anlage nach Anspruch 4 oder 5, **dadurch gekennzeichnet, dass** die Bildaufnahmevorrichtung (38) weitere Kameras (44) umfasst, die auf Identifizierungsmerkmale des mobilen Transporters und/oder des Lagers gerichtet sind.

7. Anlage nach einem der Ansprüche 1 bis 6, **dadurch gekennzeichnet, dass** die Auswerte- und Steuervorrichtung (16) mit einem Datum- und Zeitgeber (66) verbunden ist und mittels der Auswerte- und Steuervorrichtung (16) Datum- und Zeitangaben mit Daten der Identifikationsträger (50), Standortangaben und Bilder der Güter verknüpfbar sind.

8. Anlage nach einem der Ansprüche 1 bis 7, **dadurch gekennzeichnet, dass** die Auswerte- und Steuervorrichtung (16) über eine Datenschnittstelle (70) mit einem Netzwerk (72) verbunden ist, über das Daten der Identifikationsträger (50) und Bilder der Güter zu einer Zentrale (74) übermittelbar sind.

9. Anlage nach einem der Ansprüche 1 bis 8, **dadurch gekennzeichnet, dass** die Auswerte- und Steuervorrichtung (16) über eine Datenschnittstelle (76) mit einem Netzwerk (72) verbunden ist, und dass Berechtigungsdaten von der Zentrale (74) zur Auswerte- und Steuervorrichtung (16) übermittelbar sind.

10. Anlage nach einem der Ansprüche 1 bis 9, **dadurch gekennzeichnet, dass** die Signalvorrichtung (68) durch die Auswerte- und Steuervorrichtung (16) in Abhängigkeit der Daten der Identifikationsträger (50) ausschließlich oder in Abhängigkeit der Daten der Identifikationsträger (50) in Verbindung mit gespeicherten Transferdaten und/oder über das Netzwerk (72) übertragener Transferdaten steuerbar ist.

11. Verfahren zur Überwachung des Transfers von mit Identifikationsträgern versehenen Gütern über eine Ladeschnittstelle (10) zwischen einem mobilen Transporter und einem Lager oder zwischen zwei mobilen Transportern, wobei beim Transfer der Güter über die Ladeschnittstelle (10) mittels einer Lesevorrichtung (14) zum kontaktlosen Lesen der Identifikationsträger (50) Daten der Identifikationsträger (50) gelesen, mittels eines Standorterfassungsgerätes (82) Standortangaben der Güter erfasst und mittels einer Bildaufnahmevorrichtung (38) wenigstens ein Bild der Güter erfasst werden und mittels einer Auswerte- und Steuervorrichtung (16) die Daten der Identifikationsträger (50), die Standortangaben und das wenigstens eine Bild miteinander verknüpft werden und eine Signalvorrichtung (68) angesteuert wird, **dadurch gekennzeichnet, dass** die Bildaufnahmevorrichtung (38) und die Lesevorrichtung (14) durch eine mit der Auswerte- und Steuervorrichtung (16) verbundene, sowohl eine Bewegung als eine Bewegungsrichtung erfassende Bewegungserfassungsvorrichtung (34) Bewegungserfassungsvorrichtung (34) getriggert werden und die erfasste Bewegungsrichtung durch die Auswerte- und Steuervorrichtung zusätzlich mit den Daten der Identifikationsträger (50), über ein globales Positionserfassungsgerät erfassten Standortangaben und dem wenigstens einen Bild der Güter verknüpft werden, wobei die Daten der Identifikationsträger und die erfassten Standortdaten mit Referenzdaten verglichen werden, das Ergebnis des Vergleichs mit dem wenigstens einen Bild, der erfassten Bewegungsrichtung und den Daten des Identifikationsträgers durch die Auswerte- und Steuervorrichtung (16) verknüpft werden und abhängig vom Vergleich ein Signal durch die Signalvorrichtung (68) erzeugt wird.

12. Verfahren nach Anspruch 11, **dadurch gekennzeichnet, dass** zusätzlich Bilder des mobilen Transporters und/oder des Lagers aufgenommen und mit Daten der Identifikationsträger (50) verknüpft werden.

13. Verfahren nach Anspruch 11 oder 12, **dadurch gekennzeichnet, dass** zusätzlich Bilder von Identifizierungsmerkmalen des mobilen Transporters und/oder des Lagers aufgenommen und mit Daten der Identifikationsträger (50) verknüpft werden.

14. Verfahren nach einem der Ansprüche 11 bis 13, **dadurch gekennzeichnet, dass** die Daten der Identifikationsträger (50), die Standortangaben und die Bilddaten mit Datum- und Zeitangaben verknüpft werden.

15. Verfahren nach einem der Ansprüche 11 bis 14, **dadurch gekennzeichnet, dass** die verknüpften Daten über eine Datenschnittstelle (70) und ein Netzwerk (72) zu einer Zentrale (74) übermittelt werden.

16. Verfahren nach einem der Ansprüche 11 bis 15, **dadurch gekennzeichnet, dass** über ein Netzwerk (72) Berechtigungsdaten von der Zentrale (74) zur Auswerte- und Steuervorrichtung (16) übermittelt werden.

17. Verfahren nach einem der Ansprüche 11 bis 16, **dadurch gekennzeichnet, dass** die Signalvorrichtung (68) in Abhängigkeit der Daten der Identifikationsträger (50) ausschließlich oder in Abhängigkeit der Daten der Identifikationsträger (50) in Verbindung mit gespeicherten Transferdaten und/oder über das Netzwerk (72) übertragener Transferdaten gesteuert wird.

18. Verfahren nach Anspruch 17, **dadurch gekennzeichnet, dass** die Signalvorrichtung (68) zusätzlich in Abhängigkeit von Datum- und Zeitangaben gesteuert wird.

## Claims

1. System for surveying the transfer of goods provided with identification carriers (50), comprising a loading interface (10) between a mobile transporter and a warehouse or between two mobile transporters, via which interface the transfer of the goods takes place, as well as a reading device (14) for contact-free reading of the identification carriers (50), a location detection device (82), an image recording device (38), a signal device (68) and an evaluation and control device (16), wherein the reading device (14), the location detection device (82), the image recording device (38) and the signal device (68) are connected to an evaluation and control device (16), and, in the case of the transfer of the goods via the loading interface (10), by means of the reading device (14) data of the identification carriers (50), by means of the location detection device (82) location details of the goods can be detected and by means of the image recording device (38) at least one image of the goods can be recorded and can be linked to one another jointly by the evaluation and control device (16) and the signal device (68) can be controlled by the evaluation and control device (16), **characterised in that** the location detection device is a global position detection device (82), that the image recording device (38) and the reading device (14) can be triggered by a movement detection device (34), which is connected to the evaluation and control device (16) and detects a movement as a movement direction and the detected movement direction can be linked by the evaluation and control device (16) additionally to the data of the identification carriers (50), the location details detected by the global position detection device (82) and the at least one image of the goods, wherein the data of the identification carriers and the detected location data can be compared with reference data, the result of the comparison can be linked to the at least one image, the detected movement direction and the data of the identification carrier by the evaluation and control device (16) and the signal device (68) can be controlled as a function of the comparison.

2. System according to Claim 1, **characterised in that** the movement detection device (34) comprises a double light barrier or a radar sensor (36).

3. System according to Claim 1 or 2, **characterised in that** the reading device (14) comprises four reading antennae (18, 20, 22, 24) arranged laterally of the loading interface (10), which antennae are, in each case, connected to a separate reading device (26, 28, 30, 32) or via an antenna multiplexer to a joint reading device.

4. System according to one of Claims 1 to 3, **characterised in that** the image recording device (38) comprises at least one camera (40) which is directed at the loading interface (10).

5. System according to Claim 4, **characterised in that** the image recording device (38) comprises further cameras (42) which are directed at the mobile transporter and/or the warehouse.

6. System according to Claim 4 or 5, **characterised in that** the image recording device (38) comprises further cameras (44) which are directed at identification features of the mobile transporter and/or the warehouse.

7. System according to one of Claims 1 to 6, **characterised in that** the evaluation and control device (16) is connected to a calendar and timer (66) and by means of the evaluation and control device (16) date and time details can be linked to data of the identification carriers (50), location details and images of the goods.

8. System according to one of Claims 1 to 7, **characterised in that** the evaluation and control device (16) is connected via a data interface (70) to a network (72), via which data of the identification carriers (50) and images of the goods can be transmitted to a control centre (74).

9. System according to one of Claims 1 to 8, **characterised in that** the evaluation and control device (16) is connected via a data interface (76) to a network (72), and that permission data can be transmitted from the control centre (74) to the evaluation and control device (16).

10. System according to one of Claims 1 to 9, **characterised in that** the signal device (68) can be controlled by the evaluation and control device (16) as a function of the data of the identification carriers (50) exclusively or as a function of the data of the identification carriers (50) in combination with stored transfer data and/or transfer data transmitted via the network (72).

11. Method for surveying the transfer of goods provided with identification carriers via a loading interface (10) between a mobile transporter and a warehouse or between two mobile transporters, wherein in the case of the transfer of the goods via the loading interface (10) data of the identification carriers (50) are read by means of a reading device (14) for contact-free reading of the identification carriers (50), location details of the goods are detected by means of a location detection device (82) and at least one image of the goods are detected by means of an image recording device (38) and the data of the identification carriers (50), the location details and the at least one image are linked to one another by means of an evaluation and control device (16) and a signal device (68) is activated, **characterised in that** the image recording device (38) and the reading device (14) are triggered by a movement detection device (34), which is connected to the evaluation and control device (16) and detects a movement as a movement direction and the detected movement direction is linked by the evaluation and control device additionally to the data of the identification carriers (50), location details detected by a global position detection device and the at least one image of the goods, wherein the data of the identification carriers and the detected location data can be compared with reference data, the result of the comparison is linked to the at least one image, the detected movement direction and the data of the identification carrier by the evaluation and control device (16) and a signal is generated by the signal device (68) as a function of the comparison.

12. Method according to Claim 11, **characterised in that** additionally images of the mobile transporter and/or of the warehouse are recorded and are linked to data of the identification carriers (50).

13. Method according to Claim 11 or 12, **characterised in that** additionally images of identification features of the mobile transporter and/or of the warehouse are recorded and are linked to data of the identification carriers (50).

14. Method according to one of Claims 11 to 13, **characterised in that** the data of the identification carriers (50), the location details and the image data are linked to date and time details.

15. Method according to one of Claims 11 to 14, **characterised in that** the linked data are transmitted via a data interface (70) and a network (72) to a control centre (74).

16. Method according to one of Claims 11 to 15, **characterised in that** permission data are transmitted via a network (72) from the control centre (74) to the evaluation and control device (16).

17. Method according to one of Claims 11 to 16, **characterised in that** the signal device (68) is controlled as a function of the data of the identification carriers (50) exclusively or as a function of the data of the identification carriers (50) in combination with stored transfer data and/or transfer data transmitted via the network (72).

18. Method according to Claim 17, **characterised in that** the signal device (68) is additionally controlled as a function of date and time details.

## Revendications

1. Installation de surveillance du transfert de biens munis de supports d'identification (50), comprenant une interface de chargement (10) entre un transporteur mobile et un magazine ou entre deux transporteurs mobiles, par l'intermédiaire desquels le transfert des biens a lieu, ainsi qu'un dispositif de lecture (14) pour la lecture sans contact des supports d'identification (50), un appareil de détection de position (82), un dispositif de prise d'image (38), un dispositif de signalisation (68) et un dispositif d'évaluation et de commande (16), le dispositif de lecture (14), l'appareil de détection de position (82), le dispositif de prise d'image (38) et le dispositif de signalisation (68) étant reliés à un dispositif d'évaluation et de commande (16) et des données des supports d'identification (50) pouvant être lues au moyen du dispositif de lecture (14), des indications relatives à la position des biens étant détectées au moyen de l'appareil de détection de position (82) et au moins une image des biens pouvant être prise au moyen du dispositif de prise d'image (38) via l'interface (10), lors du transfert des biens, et combinés entre eux par le dispositif d'évaluation et de commande (16) et le dispositif de signalisation (69) pouvant être commandé par le dispositif d'évaluation et de commande (16), **caractérisé en ce que** l'appareil de détection de la position est un appareil de détection de position global (82), que le dispositif de prise d'image (38) et le dispositif de lecture (14) peuvent être déclenchés par un dispositif de détection de mouvement (34) détectant aussi bien un mouvement qu'une direction de mouvement, dispositif de détection de mouvement (34) qui est relié au dispositif d'évaluation et de commande (16), la direction de mouvement détectée par le dispositif d'évaluation et de commande (16) pouvant être combinée en plus avec les données des supports d'identification (50), les indications relatives à la position détectées par l'appareil de détection de position globale (82) et avec l'au moins une image des biens, les données des supports d'identification et les données de position détectées pouvant être comparées à des données de référence, le résultat de la comparaison pouvant être combiné avec l'au moins une image, la direction de mouvement détectée et les données du support d'identification par le dispositif d'évaluation et de commande (16) et le dispositif de signalisation (68) pouvant être commandé en fonction de la comparaison.

2. Installation suivant la revendication 1, **caractérisée en ce que** le dispositif de détection de mouvement (34) comprend une double barrière lumineuse ou un capteur radar (36).

3. Installation suivant la revendication 1 ou 2, **caractérisée en ce que** le dispositif de lecture (14) comprend quatre antennes de lecture (18, 20, 22, 24), qui sont disposées à côté de l'interface de chargement (10) et respectivement reliées à un propre appareil de chargement (26, 28, 30, 32) ou à un appareil de lecture commun via un multiplexeur d'antenne.

4. Installation suivant une des revendications 1 à 3, **caractérisée en ce que** le dispositif de prise d'image (38) comprend au moins une caméra (40), qui est orientée vers l'interface de chargement (10).

5. Installation suivant la revendication 4, **caractérisée en ce que** le dispositif de prise d'image (38) comprend d'autres caméras (42) qui sont orientées vers le transporteur mobile et/ou le magazine.

6. Installation suivant la revendication 4 ou 5, **caractérisée en ce que** le dispositif de prise d'image (38) comprend d'autres caméras (44) qui sont orientées vers des caractéristiques d'identification du transporteur mobile et/ou du magazine.

7. Installation suivant une des revendications 1 à 6, **caractérisée en ce que** le dispositif d'évaluation et de commande (16) est relié à un horodateur (66) et que des indications de date et d'heure peuvent être combinées à des données des supports d'identification (50), des indications de position et des images des biens au moyen du dispositif d'évaluation et de commande (16).

8. Installation suivant une des revendications 1 à 7, **caractérisée en ce que** le dispositif d'évaluation et de commande (16) est relié, via une interface de données (70) à un réseau (72), via lequel des données des supports d'identification (50) et des images des biens peuvent être transmises à une centrale (74).

9. Installation suivant une des revendications 1 à 8, **caractérisée en ce que** le dispositif d'évaluation et de commande (16) est relié via une interface de données (76) à un réseau (72) et **en ce que** des données d'autorisation peuvent être transmises de la centrale (74) au dispositif d'évaluation et de commande (16).

10. Installation suivant une des revendications 1 à 9, **caractérisée en ce que** le dispositif de signalisation (68) peut être commandé par le dispositif d'évaluation et de commande (16) en fonction uniquement des données des supports d'identification (50) ou en fonction des données des supports d'identification (50) en liaison avec des données de transfert mémorisées et/ou avec des données de transfert transmises via le réseau (72).

11. Procédé de surveillance du transfert de biens munis de supports d'identification via une interface de chargement (10) entre un transporteur mobile et un magazine ou entre deux transporteurs mobiles, des données des supports d'identification (50) étant lues au moyen d'un dispositif de lecture (14) pour la lecture sans contact des supports d'identification (50), des indications relatives à la position des biens étant détectées au moyen d'un appareil de détection de position (82) et au moins un image des biens étant prise au moyen d'un dispositif de prise d'image (38), les données des supports d'identification (50), les indications relatives à la position et l'au moins une image étant combinées au moyen d'un dispositif d'évaluation et de commande (16) et un dispositif de signalisation (68) étant excité, **caractérisé en ce que** le dispositif de prise d'image (38) et le dispositif de lecture (14) sont déclenchés par un dispositif de détection de mouvement (34), qui est relié au dispositif d'évaluation et de commande (16) et qui détecte aussi bien un mouvement qu'une direction de mouvement et **en ce que** la direction de mouvement détectée est en plus combinée, par le dispositif d'évaluation et de commande, avec les données des supports d'identification (50), les indications relatives à la position détectées par l'intermédiaire d'un appareil de détection de position global et l'au moins une image des biens, les données des supports d'identification et les données de position détectées étant comparées à des données de référence, le résultat de la comparaison étant combiné avec l'au moins une image, la direction de mouvement détectée et les données du support d'identification par le dispositif d'évaluation et de commande (16) et un signal étant généré par le dispositif de signalisation (68) en fonction de la comparaison.

12. Procédé suivant la revendication 11, **caractérisé en ce qu'**en plus des images du transporteur mobile et/ou du magazine sont prises et combinées avec des données des supports d'identification (50).

13. Procédé suivant la revendication 11 ou 12, **caractérisé en ce qu'** en plus des images de caractéristiques d'identification du transporteur mobile et/ou du magazine sont prises et combinées avec des données des supports d'identification (50).

14. Procédé suivant une des revendications 11 à 13, **caractérisé en ce que** les données des supports d'identification (50), les indications relatives à la position et les données d'images sont combinées avec des indications relatives à la date et à l'heure.

15. Procédé suivant une des revendications 11 à 14, **caractérisé en ce que** les données combinées sont transmises à une centrale (74) via une interface de données (70) et un réseau (72).

16. Procédé suivant une des revendications 11 à 15, **caractérisé en ce que** des données d'autorisation sont transmises par la centrale (74) via un réseau (72) à un dispositif d'évaluation et de commande (16).

17. Procédé suivant une des revendications 11 à 16, **caractérisé en ce que** le dispositif de signalisation (68) est commandé en fonction des données des supports d'identification (50) exclusivement ou en fonction des données des supports d'identification (50) en liaison avec des données de transfert mémorisées et/ou avec des données de transfert transmises via le réseau (72).

18. Procédé suivant la revendication 17, **caractérisé en ce que** le dispositif de signalisation (68) est commandé en plus en fonction d'indications relatives à la date et à l'heure.
